(19) Europäisches Patentamt
European Patent Office
Office européen des brevets

(11) Veröffentlichungsnummer : **0 433 265 A2**

(12) # EUROPÄISCHE PATENTANMELDUNG

(21) Anmeldenummer : **90890312.3**

(22) Anmeldetag : **03.12.90**

(51) Int. Cl.[5] : **C08J 3/20**, C08K 9/04, C08L 79/08

(30) Priorität : **11.12.89 AT 2794/89**

(43) Veröffentlichungstag der Anmeldung : **19.06.91 Patentblatt 91/25**

(84) Benannte Vertragsstaaten : **AT BE CH DE ES FR GB IT LI NL SE**

(71) Anmelder : **Lenzing Aktiengesellschaft**
**A-4860 Lenzing (AT)**

(72) Erfinder : **Schobesberger, Manfred**
**Gerlham 4**
**A-4863 Seewalchen (AT)**
Erfinder : **Bieringer, Heimo, Dr.**
**Neuhausen 15**
**A-4861 Schörfling (AT)**
Erfinder : **Weinrotter, Klaus, Dr.**
**Stadtplatz 36**
**A-4840 Vöcklabruck (AT)**

(74) Vertreter : **Wolfram, Gustav, Dipl.-Ing.**
**Schwindgasse 7 P.O. Box 205**
**A-1041 Wien (AT)**

(54) **Kompositteilchen mit Polyimid-Struktureinheiten und einem Kern aus Füllstoff.**

(57) Kompositteilchen mit Polyimid-Struktureinheiten der allgemeinen Formel

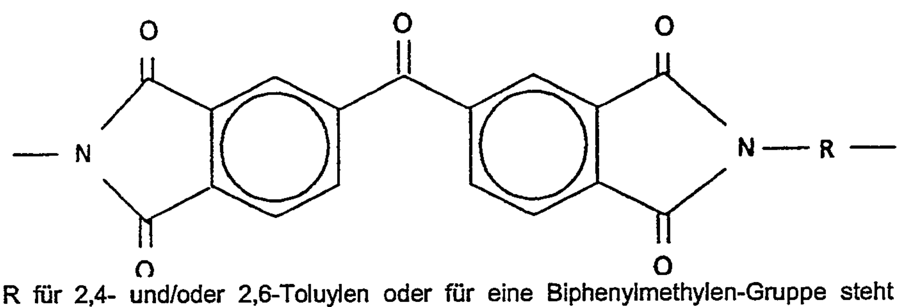

, (I)

worin R für 2,4- und/oder 2,6-Toluylen oder für eine Biphenylmethylen-Gruppe steht und einem Kern aus Füllstoff, können zu Formkörpern verpreßt werden. Als Füllstoffe kommen z.B. Glas, Glimmer, Graphit oder vorzugsweise PTFE in Frage.

EP 0 433 265 A2

# KOMPOSITTEILCHEN MIT POLYIMID-STRUKTUREINHEITEN UND EINEM KERN AUS FÜLLSTOFF

Die Erfindung betrifft Kompositteilchen mit Polyimid-Struktureinheiten und einem Kern aus Füllstoff, ein Verfahren zu ihrer Herstellung sowie Formkörper aus diesen Kompositteilchen.

Es ist bekannt, Pulvergemische aus Polyimiden und nichtmetallischen Füllstoffen zur Herstellung von Formkörpern zu verwenden. Dazu wird Polyimidpulver und Füllstoffpulver innig vermischt und unter Formgebung gesintert. Die auf diese Weise erhaltenen Formkörper weisen aber durchwegs schlechtere mechanische Eigenschaften auf als Formkörper, die nur aus Polyimid bestehen.

In der GB-A-2,176,193 wird die Herstellung von Polyimidteilchen beschrieben, die einen Kern aus Füllstoff enthalten. Dazu wird der Füllstoff in zerkleinerter Form in einem flüssigen Medium dispergiert und in eine Vorstufe der Polyimidherstellung eingebracht. Das Polyimid wird somit in Gegenwart des Füllstoffes hergestellt. Das wird erreicht, indem zunächst ein aromatisches Tetracarbonsäuredianhydrid mit einem aromatischen Diamin in einem polaren Lösungsmittel zur Polyamidsäure umgesetzt wird. Bevor aber die Imidisierung zum Polyimid vorgenommen wird, wird der im flüssigen Medium dispergierte Füllstoff der Reaktionsmischung zugegeben. Im Laufe der Imidisierung lagert sich das Polyimid an der Oberfläche der Füllstoffteilchen ab, wodurch diese zur Gänze oder teilweise beschichtet werden.

Ein Nachteil dieses Verfahrens besteht in der aufwendigen Reaktionsführung über die Polyamidsäure. Dieser Weg zwingt auch zu einem Nachkondensieren, da die Imidisierung oft nicht vollständig gelingt. Es ist auch nicht möglich, Polyimidteilchen mit definierter Korngröße herzustellen, wodurch die Rieselfähigkeit zu wünschen übrig läßt. Darüberhinaus besitzt das Endprodukt keine hohe Schüttdichte.

Die Erfindung setzt sich zum Ziel, Kompositteilchen der eingangs beschriebenen Art zur Verfügung zu stellen, die diese Nachteile nicht aufweisen.

Die erfindungsgemäßen Kompositteilchen besitzen Polyimid-Struktureinheiten der allgemeinen Formel

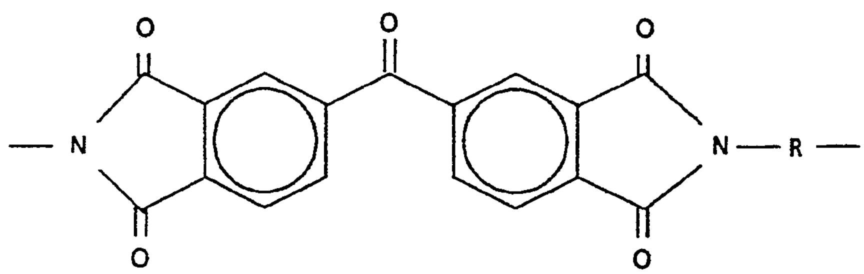 , (I)

worin R für 2,4- und/oder 2,6-Toluylen oder für eine Gruppe der Formel

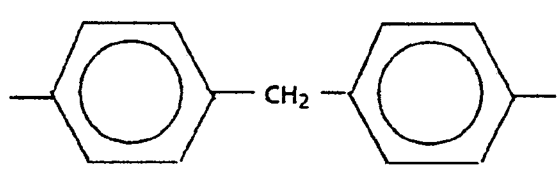

steht.

Durch die Verwendung dieser Polyimid-Struktureinheiten kann auf die Reaktionsführung über die Polyamidsäure verzichtet werden. Die erfindungsgemäßen Kompositteilchen können auf einfache Weise durch Fällung des Polyimids aus einer Lösung in Gegenwart von Füllstoffteilchen hergestellt werden. Dabei entstehen Kompositteilchen definierter Korngröße mit guter Rieselfähigkeit und hoher Schüttdichte.

Die erfindungsgemäßen Kompositteilchen bestehen vorzugsweise zwischen 1 bis 50 Massen% aus Polyimid.

Der Füllstoff kann u.a. aus Graphit, Glas, $MoS_2$, Glimmer oder vorzugsweise Polytetrafluoräthylen (PTFE) geformt sein. Insbesondere wenn PTFE als Füllstoff verwendet wird, zeigen sich die Vorteile der erfindungsgemäßen Kompositteilchen. Es ist bekannt, daß z.B. die Scherempfindlichkeit von PTFE-Pulver seine Verarbeitung erschwert, bzw. seine Neigung zum Zusammenbacken einen Transport über größere Entfernungen nur unter Kühlen der Behälter zuläßt, und daß auch seine Rieselfähigkeit schlecht ist. Diese Schwierigkeiten können überwunden werden, wenn das PTFE-Pulver zumindest teilweise mit einem Polyimid der oben angegebenen Struktureinheiten überzogen ist. Es genügt bereits, wenn das Kompositteilchen zu weniger als 20

Massen% aus Polyimid besteht, wenn das PTFE-Pulver somit nur von einer dünnen Polyimidschicht überzogen ist.

Eine bevorzugte Ausführungsform der erfindungsgemäßen Kompositteilchen besteht darin, daß die Teilchen einen Durchmesser von maximal 3 mm aufweisen und ihre Schüttdichte zwischen 0,20 und 0,70 g/$cm^3$, vorzugsweise zwischen 0,30 und 0,40 g/$cm^3$, beträgt. Diese hohen Schüttdichten erleichtern das Verpressen und Versintern der Kompositteilchen, da für die Formgebung nicht mit großen Formen begonnen werden muß und eine exakte, d.h. konturengetreue Ausfüllung der Form gewährleistet ist.

Die erfindungsgemäßen Kompositteilchen eignen sich sehr gut zur Herstellung von Formkörpern durch Verpressen bei einem Druck zwischen vorzugsweise 200 und 800 bar und bei einer Temperatur zwischen 20 und 400°C.

Die erfindungsgemäßen Formkörper weisen durchwegs bessere mechanische insbesondere jedoch bessere tribologishe Eigenschaften auf als jene, die mit heute bekannten Kompositteilchen erhalten werden. Kompositteilchen mit einem Kern aus PTFE können beispielsweise zur Herstellung thermisch beanspruchter Lager oder Düsen verwendet werden, die sich weiters durch eine verbesserte Härte gegenüber PTFE und damit durch eine verbesserte Abriebfestigkeit auszeichnen.

Die Erfindung betrifft auch ein Verfahren zur Herstellung dieser Kompositteilchen, das dadurch gekennzeichnet ist, daß Füllstoffteilchen in einer Lösung des Polyimids dispergiert und die erhaltene Dispersion in ein wässeriges Fällungsmittel eingebracht werden, wobei die Füllstoffteilchen mit einer Polyimidschicht zumindest teilweise umhüllt werden, worauf die erhaltenen Produkte abgetrennt, mit Wasser gewaschen, getrocknet und gegebenenfalls zerkleinert werden.

Beim erfindungsgemäßen Verfahren wird am besten eine Lösung des Polyimids in einem aprotischen, polaren Lösungsmittel, wie Dimethylformamid, Dimethylacetamid, Dimethylsulfoxid oder N-Methylpyrrolidon, mit 1 bis 30 Massen% an Polyimid, eingesetzt. Die Herstellung einer derartigen Lösung ist beispielsweise in der US-A-3,708,458 beschrieben.

Die Korngröße des Füllstoffes kann in weiten Bereichen variieren. Beim erfindungsgemäßen Verfahren kann auch ein faserartiger Füllstoff mit einer Stapellänge bis zu 3 mm eingesetzt werden.

Die Dispersion kann auf einfache Weise hergestellt werden, indem der Füllstoff in die Polyimidlösung bis zur Homogenität eingerührt wird.

Zur Fällung des Polyimids wird die Dispersion in ein wässeriges Fällungsmittel, vorzugsweise in ein Wasser/DMF-Gemisch, eingebracht, wobei beispielsweise das in der AT-B-387.227 beschriebene Verfahren verwendet werden kann. Das gefällte Produkt wird anschließend abgetrennt, getrocknet und gegebenenfalls zerkleinert. Das Zerkleinern kann beispielsweise mit einer Feinprallmühle erfolgen. Die beim Mahlen entstehenden Kompositteilchen weisen einen geschlossenen oder teilweise geschlossenen Polyimidüberzug auf.

Ein wesentlicher Vorteil des erfindungsgemäßen Verfahrens besteht darin, daß die Viskosität der Polyimidlösung keine limitierende Größe ist. Es ist daher möglich, ein Vielfaches des Polyimidgehaltes an Füllstoff einzubringen und dadurch Kompositteilchen mit einer äußerst dünnen Polyimidschicht herzustellen.

Es ist auch möglich, Füllstoffgemische, wie Graphit und Kohlenstoffasern zu verarbeiten. Eine Klumpenbildung ist nach dem erfindungsgemäßen Verfahren trotzdem ausgeschlossen. Die Rieselfähigkeit der erfindungsgemäßen Kompositteilchen, insbesondere jener mit PTFE im Kern, bleibt auch bei erhöhten Temperaturen (bis 300°C) erhalten, im Gegensatz zu den heute bekannten Mischungen. Dies erlaubt eine wesentlich vereinfachte Handhabung bei der Verarbeitung, insbesondere bei einer eventuell notwendigen Vortrocknung.

Mit den nachfolgenden Beispielen wird die Erfindung noch näher beschrieben, wobei das verwendete Polyimid Struktureinheiten der Formel (I) aufwies, worin R zu etwa 80 Mol% für 2,4- und/oder 2,6-Toluylen und zu etwa 20 Mol% für die Biphenylmethylen-Gruppe steht.

Beispiel 1 :

Das Polyimid wurde in DMF zu einer Lösung mit 25 Massen% aufgenommen. In diese Lösung wurden in einem Intensivmischer 15 Massen% (bezogen auf das Polyimid) Graphit mit einer Teilchengröße < 6 µm eingerührt. Danach wurde die erhaltene Dispersion in ein Wasser/DMF-Gemisch (2 : 1) eingebracht und das ausgefällte Produkt lösungsmittelfrei gewaschen. Die Trocknung erfolgte mit Heißluft. Die erhaltenen Körner wurden in einer Feinprallmühle zu einer Korngröße von 20 bis 150 µm vermahlen. Die Schüttdichte der erhaltenen Kompositteilchen betrug 0,45 g/$cm^3$ Sie bestanden zu 85% aus Polyimid.

Anschließend wurden die Kompositteilchen bei einer Temperatur von 350°C und einem Druck von 350 bar zu einem Formteil verpreßt.

Der Formteil wies eine glatte, geschlossene Oberfläche auf und ließ sich gut mechanisch bearbeiten.

Zugfestigkeit : 65 N/$mm^2$

Zugdehnung : 1,8%
Biegefestigkeit : 150 N/mm²
Randfaserdehnung : 5%

Beispiel 2 :

In eine Lösung mit 7 Massen% Polyimid in DMF wurden 80 Massen% (bezogen auf das Polyimid) PTFE-Mikropulver (Korngröße < 10 µm) eingerührt, die erhaltene Dispersion in einem Wasser/DMF-Gemisch (2 : 1) ausgefällt und das Fällungsprodukt lösungsmittelfrei gewaschen. Getrocknet wurde mit Heißluft.

Der erhaltene Feststoff bestand zu 80 Massen% aus PTFE und zu 20 Massen% aus Polyimid und wurde in einer Feinprallmühle unter Stickstoffkühlung bei T =-30°C zu Pulver mit einer Korngröße von 20 bis 100 µm vermahlen. Nach dem Vortrocknen bei 320°C unter Vakuum wurde das Pulver bei einer Temperatur von 20°C und bei einem Druck von 550 bar verpreßt. Nach dem Entformen wurde der Formteil bei 370°C im Umluftofen gesintert.

Der fertige Formteil wies eine homogene Braunfärbung auf und hatte eine glatte, porenfreie Oberfläche. Er konnte sehr gut mechanisch bearbeitet werden.

Zugfestigkeit : 20 N/mm²
Zugdehnung : 200%

Beispiel 3 :

In eine Lösung mit 15 Massen% Polyimid in DMF wurden 15 Massen% (bezogen auf das Polyimid) Graphit (Teilchengröße < 6 µm) eingerührt, die Dispersion mit DMF auf 15 Massen% Gesamtfeststoffgehalt verdünnt und in einem Wasser/DMF-Gemisch (1 : 1) ausgefällt.

Es wurden wesentlich feinere Feststoffteilchen erhalten als in Beispiel 1 (die Teilchengröße betrug 1 bis 2 mm, bei flockiger Struktur, Schüttdichte : 0,25 g/cm³). Sie wurden mit Heißwasser gewaschen, heißluftgetrocknet und ohne Feinmahlung direkt zu einem Formteil unter den in Beispiel 1 angegebenen Bedingungen verpreßt.

Der Formteil wies eine glatte Oberfläche auf und war frei von Poren und Einschlüssen.

Zugfestigkeit : 100 N/mm²
Zugdehnung : 3,5%
Biegefestigkeit : 165 N/mm²
Randfaserdehnung : 5%

## Ansprüche

1. Kompositteilchen mit Polyimid-Strukturenheiten der allgemeinen Formel

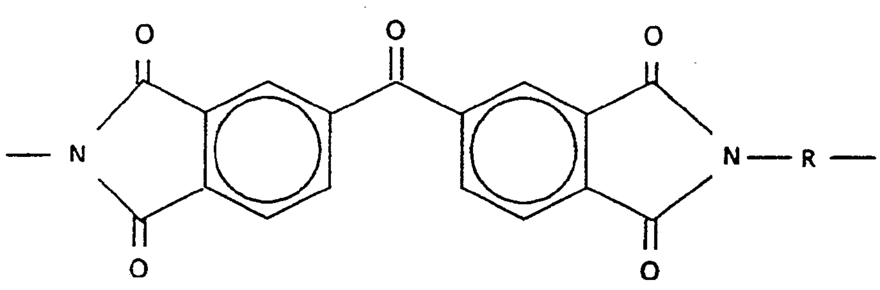

, (I)

worin R für 2,4- und/oder 2,6-Toluylen oder für eine Gruppe der Formel

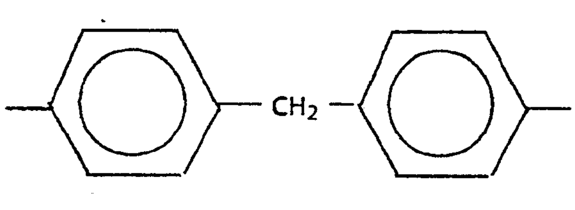

steht und einem Kern aus Füllstoff.

2. Kompositteilchen nach Anspruch 1, welche zwischen 1 bis 50 Massen% aus Polyimid bestehen.

3. Kompositteilchen nach Anspruch 1 oder 2, dadurch gekennzeichnet, daß der Füllstoff aus Graphit, Glas, $MoS_2$ oder Glimmer geformt ist.

4. Kompositteilchen nach Anspruch 1 oder 2, dadurch gekennzeichnet, daß der Füllstoff aus Polytetrafluoräthylen (PTFE) geformt ist.

5. Kompositteilchen nach einem oder mehreren der Ansprüche 1 bis 4, dadurch gekennzeichnet, daß die Teilchen einen Durchmesser von maximal 3 mm aufweisen und ihre Schüttdichte zwischen 0,20 und 0,70 g/cm³, vorzugsweise zwischen 0,30 und 0,40 g/cm³, beträgt.

6. Formkörper hergestellt durch Verpressen von Kompositteilchen nach einem oder mehreren der Ansprüche 1 bis 5, bei einem Druck zwischen vorzugsweise 200 und 800 bar und bei einer Temperatur zwischen 20 und 400°C.

7. Verfahren zur Herstellung von Kompositteilchen nach einem oder mehreren der Ansprüche 1 bis 4, dadurch gekennzeichnet, daß Füllstoffteilchen in einer Lösung des Polyimids dispergiert werden und die erhaltene Dispersion in ein wässeriges Fällungsmittel eingebracht wird, wobei die Füllstoffteilchen mit einer Polyimidschicht zumindest teilweise umhüllt werden, worauf die erhaltenen Produkte abgetrennt, mit Wasser gewaschen, getrocknet und gegebenenfalls zerkleinert werden.

8. Verfahren nach Anspruch 7, dadurch gekennzeichnet, daß eine Lösung des Polyimids in einem aprotischen, polaren Lösungsmittel, wie Dimethylformamid, Dimethylacetamid, Dimethylsulfoxid oder N-Methylpyrrolidon, mit 1 bis 30 Massen% an Polyimid, eingesetzt wird.